## Europäisches Patentamt

## European Patent Office

## Office européen des brevets

(11) Publication number:  **0 097 435**
**B1**

(12) **EUROPEAN PATENT SPECIFICATION**

(45) Date of publication of patent specification: **26.04.89**

(21) Application number: **83303044.8**

(22) Date of filing: **26.05.83**

(51) Int. Cl.⁴: **G 05 B 21/02, B 23 Q 35/123**

(54) **Sampling control method and apparatus.**

(30) Priority: **28.05.82 JP 90824/82**

(43) Date of publication of application:
**04.01.84 Bulletin 84/01**

(45) Publication of the grant of the patent:
**26.04.89 Bulletin 89/17**

(84) Designated Contracting States:
**DE FR GB**

(56) References cited:
**EP-A-0 042 304**
**EP-A-0 080 375**
**EP-A-0 080 377**

**A.Schöne,"Prozessrechensysteme"München-Wien 1981, Carl Hanser Verlag,pages 340-349.**

(73) Proprietor: **FANUC LTD**
**3580, Shibokusa Aza-Komanba Oshino-mura Minamitsuru-gun Yamanashi 401-05 (JP)**

(72) Inventor: **Matsuura, Hitoshi**
**Keioyamada-Mansion 1-406 412-7, Midori-cho Hachioji-shi Tokyo (JP)**

(74) Representative: **Billington, Lawrence Emlyn et al**
**HASELTINE LAKE & CO Hazlitt House 28 Southampton Buildings Chancery Lane London WC2A 1AT (GB)**

## Description

The present invention relates to a sampling control method and apparatus.

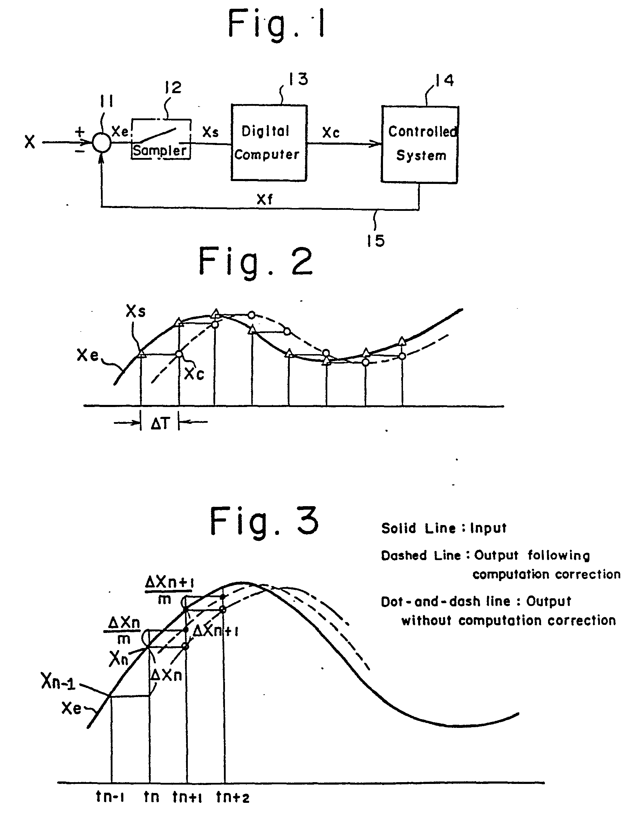

In general, an automatic control system employing a digital computer includes, as shown in Figure 1, an arithmetic unit 11 which calculates the difference between a manipulated variable $x$ and a feedback variable $x_f$ fed from a controlled system, a sampler 12 which samples the difference at predetermined intervals, the digital computer 13 which receives the sampled difference and performs predetermined processing to deliver a controlled variable $x_c$, the controlled system 14 which is controlled by the controlled variable $x_c$, and a feedback line 15. In such an automatic control system, since a certain period of time is required for the arithmetic processing in the computer, a time delay is inevitably involved between the sampled input $x_s$ applied to the digital computer 13 and the control output $x_c$ delivered therefrom, and the delay acts as a dead time in the control system. This dead time delays phase only, and adversely affects the stability of the system. In order to eliminate or reduce this drawback, it has been considered to shorten the sampling period, which, however, cannot be rendered less than the processing time of the digital computer. It has accordingly been impossible to sharply improve the stability and response of the control system.

According to a first aspect of the invention there is provided a sampling control method wherein data is sampled at regular time intervals, predetermined processing is executed on the basis of the sampled data, and a controlled system is controlled on the basis of the processing, said method comprising the steps of:

(a) evaluating a difference $(x_n - x_{n-1})$ between a sampled value $x_n$ at a certain time $t_n$ and a sampled value $x_{n-1}$ at a time $t_{n-1}$ preceding the time $t_n$ by one sampling time interval, and multiplying the difference by a coefficient $1/m$ obtained experimentally;

(b) adding the sampled value $x_n$ to the product

$$\frac{x_n - x_{n-1}}{m},$$

resulting from step (a); and

(c) executing the processing with the sum

$$x_n + \frac{x_n - x_{n-1}}{m},$$

obtained from step (b), being regarded as the sampled data at the time $t_n$.

According to a second aspect of the invention there is provided a sampling control apparatus wherein, when the apparatus is in use, data is sampled at regular time intervals, predetermined processing is executed on the basis of the sampled data, and a controlled system is controlled on the basis of the processing, comprising:

(a) a first register which, when in use, stores a sampled value $x_n$ at a certain time $t_n$;

(b) a second register which, when in use, stores a sampled value $x_{n-1}$ at a time $t_{n-1}$ preceding the time $t_n$ by one sampling time interval;

(c) an arithmetic unit which, upon reading the sampled value $x_n$ when the apparatus is in use, evaluates a difference $(x_n - x_{n-1})$ between said sampled value $x_n$ stored in said first register and the sampled value $x_{n-1}$ stored in said second register, multiplies the difference by a coefficient $1/m$ obtained experimentally and delivers the resulting product

$$\frac{x_n - x_{n-1}}{m};$$

and

(d) an adder which, when in use, adds said sampled value $x_n$ to said product and delivers the resulting sum as apparent sampled data at the time $t_n$.

According to a third aspect of the invention there is provided a sampling control apparatus wherein, when the apparatus is in use, data is sampled at regular time intervals, predetermined processing is executed on the basis of the sampled data, and a controlled system is controlled on the basis of the processing, comprising:

(a) a first register which, when in use, stores a sampled value $x_n$ at a certain time $t_n$;

(b) a second register which, when in use, stores a sampled value $x_{n-1}$ at a time $t_{n-1}$ preceding the time $t_n$ by one sampling time interval;

(c) an arithmetic unit which, upon reading the sampled value $x_n$ when the apparatus is in use, evaluates a difference $(x_n - x_{n-1})$ between said sampled value $x_n$ stored in said first register and the sampled value $x_{n-1}$ stored in said second register, multiplies the difference by a coefficient $1/m$ obtained experimentally and delivers the resulting product

$$\frac{x_n - x_{n-1}}{m};$$

(d) an adder which, when in use, adds said sampled value $x_n$ to said product value and delivers the resulting sum as apparent sampled data at the time $t_n$; and

(e) an updating unit which, when in use, stores said sampled value $x_n$ at the time $t_n$ in said second register after the delivery of said apparent sampled data at the time $t_n$, to update said sampled value $x_{n-1}$ at the time $t_{n-1}$ into said sampled value $x_n$.

The present invention may provide a sampling control method and apparatus capable of effecting an apparent reduction in a time delay lasting from a data sampling instant until the delivery of processed data, thereby demonstrating an effect equivalent to shortening of a sampling time interval.

Features and advantages of an example of the present invention will be apparent from the following description taken in conjunction with the accompanying drawings, in which like reference characters designate the same or similar parts throughout the figures thereof.

Brief description of the drawings

Figure 1 is a block diagram of an automatic control system employing a digital computer;

Figure 2 is a diagram useful in describing delay time;

Figures 3 and 4 are diagrams useful in describing a sampling control method according to the present invention; and

Figure 5 is a block diagram showing an example of application of the present invention.

An example and embodiment of the present invention will now be described in detail with reference to the drawings.

Figure 2 is a diagram useful in describing delay time. When a period of time $\Delta T$ is required for the processing executed by a digital computer, at least $\Delta T$ is required for the sampling time interval. That is, in a case where a difference $x_e$ which is delivered from an arithmetic unit 11 (refer to Figure 1) varies as indicated by a solid line, a control output value $x_c$, which corresponds to a sampled input value $x_s$ taken at a point marked $\Delta$ as a sampling input, is provided at a point marked O, in other words, at a point delayed by $\Delta T$. This period $\Delta T$ is the delay time, which is dead time. This signifies that the output lags in phase over the input by the period of time $\Delta T$.

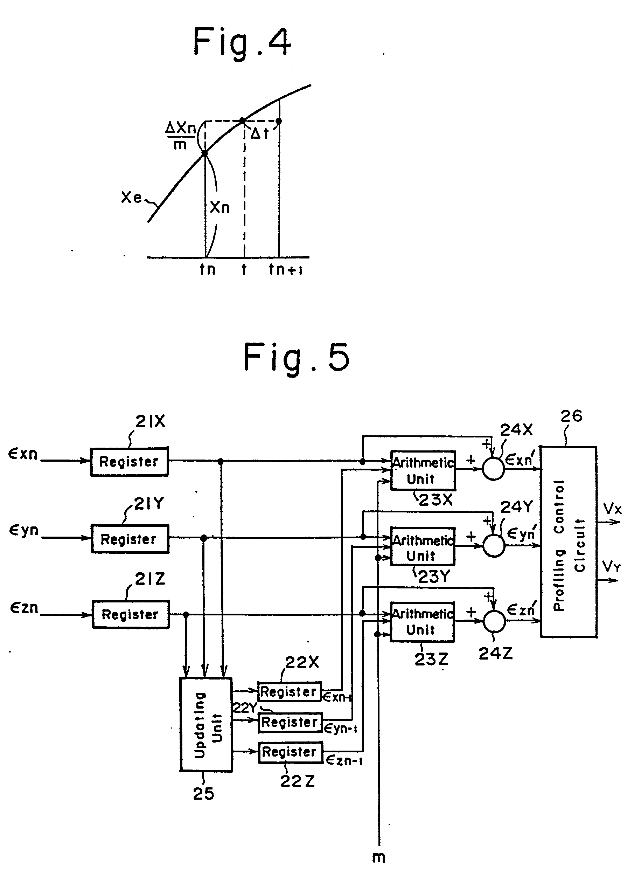

Figure 3 is diagram useful in describing a sampling control method according to the present invention.

In the present method, there is calculated a difference $\Delta x_n$ between a sampled input value $x_n$ at a certain time $t_n$ and a sampled input value $x_{n-1}$ at a time $t_{n-1}$ preceding by one sampling time interval. A value $\Delta x_n/m$ obtained by multiplying the difference $\Delta x_n$ by a proper coefficient $1/m$ is added to the input value $x_n$, and the resulting sum is regarded as the sampled input value at the time $t_n$. That is, according to the present invention, the following operation is executed each time data is sampled:

$$x_n + \frac{x_n - x_{n-1}}{m}$$

and the result of the operation is used as the apparent sampled input value. Thus, the sampled input value at the time $t_n$ can be regarded as if it were data obtained by entering a value at a time $t$ and delivering the value with a dead time $\Delta t$ relative thereto, as illustrated in Figure 4. The value $m$ is properly selected by conducting an experiment for the equipment to which the present invention is to be applied, whereby the relation of $t_n < t < t_{n+1}$ can be established, giving the relation of $\Delta t \le \Delta T$ (sampling period). This brings forth the effect of apparently shortening the sampling period, in other words, reducing the dead time. Thus, phase lag can be diminished and system stability enhanced.

Figure 5 is a block diagram of an embodiment in which the present invention is applied to profiling control.

The displacement components $\varepsilon_{xn}$, $\varepsilon_{yn}$ and $\varepsilon_{zn}$ along respective axes sampled by a stylus, not shown, at a time $t_n$ are stored in corresponding registers 21X, 21Y and 21Z. The displacement components $\varepsilon_{xn-1}$, $\varepsilon_{yn-1}$ and $\varepsilon_{zn-1}$ along the respective axes sampled at a time $t_{n-1}$ have been stored in corresponding registers 22X, 22Y and 22Z. Upon reading the displacement components $\varepsilon_{xn}$, $\varepsilon_{yn}$ and $\varepsilon_{zn}$, arithmetic units 23X, 23Y and 23Z execute the operations:

$$(\varepsilon_{xn} - \varepsilon_{xn-1})/m,$$
$$(\varepsilon_{yn} - \varepsilon_{yn-1})/m, \text{ and}$$
$$(\varepsilon_{zn} - \varepsilon_{zn-1})/m,$$

and deliver the results of these operations to adders 24X, 24Y and 24Z, respectively. In consequence, the respective adders 24X, 25Y and 24Z execute the operations:

$$\varepsilon_{xn}' = \varepsilon_{xn} + (\varepsilon_{xn} - \varepsilon_{xn-1})/m,$$
$$\varepsilon_{yn}' = \varepsilon_{yn} + (\varepsilon_{yn} - \varepsilon_{yn-1})/m, \text{ and}$$
$$\varepsilon_{zn}' = \varepsilon_{zn} + (\varepsilon_{zn} - \varepsilon_{zn-1})/m,$$

and apply these results $\varepsilon_{xn}'$, $\varepsilon_{yn}'$ and $\varepsilon_{zn}'$ to a profiling control circuit 26 as the apparent displacement values along the respective axes at the time $t_n$. Simultaneously therewith, an updating unit 25 applies the displacement values $\varepsilon_{xn}$, $\varepsilon_{yn}$ and $\varepsilon_{zn}$ at the time $t_n$ to the registers 22X, 22Y and 22Z, respectively. Using the displacement values $\varepsilon_{xn}'$, $\varepsilon_{yn}'$ and $\varepsilon_{zn}'$ along the respective axes, the profiling control circuit 26 executes well-known profiling operations so as to find feed speeds $v_x$ and $v_y$ in the respective directions of the X and Y axes and then move a cutter (not shown) and the stylus at these speeds $v_x$ and $v_y$. Although Figure 5 illustrates an arrangement based on a single-purpose hardware, the present invention is not restricted thereto but can also be constructed by employing a microcomputer.

As set forth above, according to the present invention, a time delay lasting from a data sampling instant until the delivery of processed data can be apparently reduced, whereby an effect equivalent to shortening of a sampling time can be produced. Reducing the delay time makes it possible to control a controlled system stably and accurately.

Claims

1. A sampling control method wherein data is sampled at regular time intervals, predetermined processing is executed on the basis of the sampled data, and a controlled system is controlled on the basis of the processing, said method comprising the steps of:

(a) evaluating a difference $(x_n-x_{n-1})$ between a sampled value $x_n$ at a certain time $t_n$ and a sampled value $x_{n-1}$ at a time $t_{n-1}$ preceding the time $t_n$ by one sampling time interval, and multiplying the difference by a coefficient $1/m$ obtained experimentally:

(b) adding the sampled value $x_n$ to the product

$$\frac{x_n-x_{n-1}}{m},$$

resulting from step (a); and

(c) executing the processing with the sum

$$x_n+\frac{x_n-x_{n-1}}{m},$$

obtained from step (b), being regarded as the sampled data at the time $t_n$.

2. A sampling control apparatus wherein when the apparatus is in use, data is sampled at regular time intervals, predetermined processing is executed on the basis of the sampled data, and a controlled system is controlled on the basis of the processing, comprising:

(a) a first register which, when in use, stores a sampled value $x_n$ at a certain time $t_n$;

(b) a second register which, when in use, stores a sampled value $x_{n-1}$ at a time $t_{n-1}$ preceding the time $t_n$ by one sampling time interval;

(c) an arithmetic unit which, upon reading the sampled value $x_n$ when the apparatus is in use, evaluates a difference $(x_n-x_{n-1})$ between said sampled value $x_n$ stored in said first register and the sampled value $x_{n-1}$ stored in said second register, multiplies the difference by a coefficient $1/m$ obtained experimentally and delivers the resulting product

$$\frac{x_n-x_{n-1}}{m};$$

and

(d) an adder which, when in use, adds said sampled value $x_n$ to said product and delivers the resulting sum as apparent sampled data at the time $t_n$.

3. A sampling control apparatus wherein, when the apparatus is in use, data is sampled at regular time intervals, predetermined processing is executed on the basis of the sampled data, and a controlled system is controlled on the basis of the processing, comprising:

(a) a first register which, when in use, stores a sampled value $x_n$ at a certain time $t_n$;

(b) a second register which, when in use, stores a sampled value $x_{n-1}$ at a time $t_{n-1}$ preceding the time $t_n$ by one sampling time interval;

(c) an arithmetic unit which, upon reading the sampled value $x_n$, when the apparatus is in use, evaluates a difference $(x_n-x_{n-1})$ between said sampled value $x_n$ stored in said first register and the sampled value $x_{n-1}$ stored in said second register, multiplies the difference by a coefficient $1/m$ obtained experimentally and delivers the resulting product

$$\frac{x_n-x_{n-1}}{m};$$

(d) an adder which, when in use, adds said sampled value $x_n$ to said product value and delivers the resulting sum as apparent sampled data at the time $t_n$; and

(e) an updating unit which, when in use, stores said sampled value $x_n$ at the time $t_n$ in said second register after the delivery of said apparent sampled data at the time $t_n$, to update said sampled value $x_{n-1}$ at the time $t_{n-1}$ into said sampled value $x_n$.

**Patentansprüche**

1. Abtaststeuerverfahren, bei dem Daten in regelmäßigen Zeitintervallen abgetastet werden, eine vorbestimmte Verarbeitung auf der Grundlage der abgetasteten Daten durchgeführt wird und ein gesteuertes System auf der Grundlage der Verarbeitung gesteuert wird, welches Verfahren Schritte enthält zum

(a) Auswerten einer Differenz $(x_n-x_{n-1})$ zwischen einem zu einem bestimmten Zeitpunkt $t_n$ abgetasteten Wert $x_n$ und einem zu einem Zeitpunkt $t_{n-1}$, der um ein Abtastzeitintervall vor dem Zeitpunkt $t_n$ liegt, abgetasteten Wert $x_{n-1}$ und Multiplizieren der Differenz mit einem Koeffizienten $1/m$, der experimentell gewonnen ist,

(b) Addieren des abgetasteten Werts $x_n$ zu dem Produkt

$$\frac{x_n-x_{n-1}}{m},$$

das sich aus Schritt (a) ergibt, und

(c) Durchführen der Verarbeitung mit der Summe

$$x_n+\frac{x_n-x_{n-1}}{m},$$

die in Schritt (b) gewonnen ist und als die zu dem Zeitpunkt $t_n$ abgetasteten Daten betrachtet wird.

2. Abtaststeuereinrichtung, bei der in deren Betrieb Daten in regelmäßigen Zeitintervallen abgetastet werden, eine vorbestimmte Verarbeitung auf der Grundlage der abgetasteten Daten durchgeführt wird und ein gesteuertes System auf der Grundlage der Verarbeitung gesteuert wird, mit

(a) einem ersten Register, das im Betrieb einen zu einem bestimmten Zeitpunkt $t_n$ abgetasteten Wert $x_n$ speichert,

(b) einem zweiten Register, das im Betrieb einen zu einem Zeitpunkt $t_{n-1}$, der um ein Abtast-

zeitintervall vor dem Zeitpunkt $t_n$ liegt, abgetasteten Wert $x_{n-1}$ speichert,

(c) einer arithmetischen Einheit, die im Betrieb auf das Auslesen des abgetasteten Werts $x_n$ hin eine Differenz $(x_n-x_{n-1})$ zwischen dem abgetasteten Wert $x_n$, der in dem ersten Register gespeichert ist, und dem abgetasteten Wert $x_{n-1}$, der in dem zweiten Register gespeichert ist, auswertet, die Differenz mit einem Koeffizienten $1/m$, der experimentell gewonnen ist, multipliziert und das sich ergebende Produkt

$$\frac{x_n-x_{n-1}}{m},$$

ausgibt, und

(d) einem Addierer, der im Betrieb den abgetasteten Wert $x_n$ zu dem Produkt addiert und die sich ergebende Summe als die scheinbar zu dem Zeitpunkt $t_n$ abgetasteten Daten ausgibt.

3. Abtaststeuereinrichtung, bei der in deren Betrieb Daten in regelmäßigen Zeitintervallen abgetastet werden, eine vorbestimmte Verarbeitung auf der Grundlage der abgetasteten Daten durchgeführt wird und ein gesteuertes System auf der Grundlage der Verarbeitung gesteuert wird, mit

(a) einem ersten Register, das im Betrieb einen zu einem bestimmten Zeitpunkt $t_n$ abgetasteten Wert $x_n$ speichert,

(b) einem zweiten Register, das im Betrieb einen zu einem Zeitpunkt $t_{n-1}$, der um ein Abtastzeitintervall vor dem Zeitpunkt $t_n$ liegt, abgetasteten Wert $x_{n-1}$ speichert,

(c) einer arithmetischen Einheit, die im Betrieb auf das Auslesen des abgetasteten Werts $x_n$ hin eine Differenz $(x_n-x_{n-1})$ zwischen dem abgetasteten Wert $x_n$, der in dem ersten Register gespeichert ist, und dem abgetasteten Wert $x_{n-1}$, der in dem zweiten Register gespeichert ist, auswertet, die Differenz mit einem Koeffizienten $1/m$, der experimentell gewonnen ist, multipliziert und das sich ergebende Produkt

$$\frac{x_n-x_{n-1}}{m},$$

ausgibt,

(d) einem Addierer, der im Betrieb den abgetasteten Wert $x_n$ zu dem Produktwert addiert und die sich ergebende Summe als die scheinbar zu dem Zeitpunkt $t_n$ abgetasteten Daten ausgibt, und

(e) einer Daten fortschreibeeinheit, die im Betrieb den zum dem Zeitpunkt $t_n$ abgetasteten Wert $x_n$ in dem zweiten Register nach dem Ausgeben der scheinbar zu dem Zeitpunkt $t_n$ abgetasteten Daten speichert, um den zu dem Zeitpunkt $t_{n-1}$ abgetasteten Wert $x_{n-1}$ in den abgetasteten Wert $x_n$ fortzuschreiben.

**Revendications**

1. Un procédé de commande d'échantillonnage dans lequel la donnée est échantillonnée à des intervalles de temps réguliers, un traitement prédéterminé est exécuté sur la base de la donnée échantillonnée, et un système contrôlé est commandé sur la base du traitement, le procédé comprenant les opérations de:

(a) évaluation d'une différence $(x_n-x_{n-1})$ entre une valeur échantillonnée $x_n$ à un certain moment $t_n$ et une valeur échantillonnée $x_{n-1}$ à un moment $t_{n-1}$ précédant le moment $t_n$ d'un intervalle de temps d'échantillonnage, et multiplication de la différence par un coefficient $1/m$ obtenu expérimentalement;

(b) addition de la valeur échantillonnée $x_n$ au produit

$$\frac{x_n-x_{n-1}}{m}$$

résultant de l'opération (a) et

(c) exécution du traitement avec la somme

$$x_n+\frac{x_n-x_{n-1}}{m},$$

obtenue par l'opération (b), considérée comme la donnée échantillonnée au moment $t_n$.

2. Un dispositif de commande d'échantillonnage dans lequel, lorsque le dispositif est en service, la donnée est échantillonnée à des intervalles de temps réguliers, un traitement prédéterminé est exécuté sur la base de la donnée échantillonnée, et un système de contrôle est commandé sur la base du traitement, comprenant:

(a) un premier registre qui, en service, stocke un valeur échantillonnée $x_n$ à un certain moment $t_n$;

(b) un second registre qui, en service, stocke une valeur échantillonnée $x_{n-1}$ à un moment $t_{n-1}$ précédant le moment $t_n$ d'un intervalle de temps d'échantillonnage;

(c) une unité arithmétique qui, lors de la lecture de la valeur échantillonnée $x_n$ quand le dispositif est en service, évalue une différence $(x_n-x_{n-1})$ entre ladite valeur échantillonnée $x_n$ stockée dans ledit premier registre et la valeur échantillonnée $x_{n-1}$ stockée dans ledit second registre, multiplie la différence par un coefficient $1/m$ obtenu expérimentalement et fournit le produit résultant

$$\frac{x_n-x_{n-1}}{m};$$

et

(d) un sommateur qui, en service, additionne ladite valeur échantillonnée $x_n$ audit produit et fournit la somme résultante en tant que donnée échantillonnée apparente au moment $t_n$.

3. Un dispositif de commande d'échantillonnage dans lequel, lorsque le dispositif est en sevice, la donnée est échantillonnée à des intervalles de temps réguliers, un traitement prédéterminé est exécuté sur la base de la donnée échantillonnée, et un système de contrôle est commandé sur la base du traitement, comprenant:

(a) un premier registre qui, en service, stocke

une valeur échantillonnée $x_n$ à un certain moment $t_n$;

(b) un second registre qui, en service, stocke un valeur échantillonnée $x_{n-1}$ à un moment $t_{n-1}$ précédant le moment $t_n$ d'un intervalle de temps d'échantillonnage;

(c) une unité arithmétique qui, lors de la lecture de la valeur échantillonnée $x_n$ quand le dispositif est en service, évalue une différence $(x_n-x_{n-1})$ entre ladite valeur échantillonnée $x_n$ stockée dans ledit premier registre et la valeur échantillonnée $x_{n-1}$ stockée dans ledit second registre, multiplie la différence par un coefficient $1/m$ obtenu expérimentalement et fournit le produit résultant

$$\frac{x_n-x_{n-1}}{m};$$

(d) un sommateur qui, en service, additionne ladite valeur échantillonnée $x_n$ à la valeur dudit produit et fournit la somme résultante en tant que donnée échantillonnée apparente au moment $t_n$; et

(e) une unité de mise à jour qui, en service, stocke ladite valeur échantillonnée $x_n$ au moment $t_n$ dans ledit second registre après la fourniture de ladite donnée échantillonnée apparente au moment $t_n$, pour la mise à jour de ladite valeur échantillonnée $x_{n-1}$ au moment $t_{n-1}$ dans ladite valeur échantillonnée $x_n$.

# Fig. 1

X → + / − → Xe → Sampler (12) → Xs → Digital Computer (13) → Xc → Controlled System (14)

11

Xf

15

# Fig. 2

Xs, Xe, Xc, ΔT

# Fig. 3

Solid Line : Input

Dashed Line : Output following computation correction

Dot - and - dash line : Output without computation correction

$\frac{\Delta X_{n+1}}{m}$, $\frac{\Delta X_n}{m}$, $\Delta X_{n+1}$, $X_n$, $\Delta X_n$, $X_{n-1}$, $X_e$

$t_{n-1}$   $t_n$   $t_{n+1}$   $t_{n+2}$

1

# Fig.4

# Fig.5